(19) Europäisches Patentamt

European Patent Office

Office européen des brevets

(11) **EP 0 605 047 B1**

(12) **EUROPEAN PATENT SPECIFICATION**

(45) Date of publication and mention
of the grant of the patent:
**14.02.2001 Bulletin 2001/07**

(51) Int Cl.[7]: **H04L 9/06**

(21) Application number: **93203640.3**

(22) Date of filing: **23.12.1993**

(54) **Method for blockwise encryption/decryption using linear algebraic codes**

Verfahren zur blockweisen Verschlüsselung/Entschlüsselung unter Verwendung von algebraischen linearen Codes

Procédé de chiffrage/déchiffrage par blocs utilisant des codes algébriques linéaires

(84) Designated Contracting States:
**AT BE CH DE DK ES FR GB GR IE IT LI LU NL PT SE**

(30) Priority: **29.12.1992 NL 9202284**

(43) Date of publication of application:
**06.07.1994 Bulletin 1994/27**

(73) Proprietor: **Koninklijke KPN N.V.
9726 AE Groningen (NL)**

(72) Inventors:
• **The inventor has agreed to waive his entitlement to designation.**

(56) References cited:
• **ADVANCES IN CRYPTOLOGY - CRYPTO 87 16-20 August 1987, NEW YORK (US) pages 445-457; R.STRUIK & J. van TILBURG:**
• **ADVANCES IN CRYPTOLOGY - CRYPTO 88 21-25 August 1987, BERLIN (DE) pages 540-563; T.HWANG & T.R.N.RAO:**
• **IEEE TRANSACTIONS ON INFORMATION THEORY vol. 35, no. 4 , July 1989 , NEW YORK US pages 829 - 833 T.R.N.RAO & K.H.NAM 'PRIVATE-KEY ALGEBRAIC-CODE ENCRYPTIONS'**

**Description**

A. Background of the invention

1. Field of the invention

The invention is in the field of cryptosystems. More in particular, it relates to a method for blockwise encipherment and decipherment of messages based on algebraic coding methods, making use of secret key elements.

2. Prior art

For the purpose of making secure the exchange of information via communication channels in communication networks, cryptosystems in which encipherment and decipherment takes place on the basis of algebraic coding methods, are known per se. Thus, reference [1] and references [2] and [3] describe, respectively, a "public key" cryptosystem and a "secret key" cryptosystem, which employ error-correcting codes. This involves applying an enciphering scheme in which a message to be sent of length k is converted into a cryptogram by, with the aid of a code generator, first converting the k message symbols into a code word or code vector of length n>k according to such an error-correcting code and then arranging, artificially as it were, in the code vector obtained, by addition with an error vector, an error pattern which is to be corrected subsequently. In so doing, the error vector is chosen randomly from a set of error vectors which represent error patterns which can be corrected with the aid of the given code. The cryptosystem disclosed by reference [1] employs an error-correcting code, in this case the Goppa code which is able to correct randomly chosen error vectors of Hamming weight ≤t. The cryptosystem disclosed by references [2] and [3] applies error-correcting codes, in this case BCH codes having a length of n≤250 bits and a minimum distance d≤6, the error vectors being chosen randomly from a previously specified (secret) set of error codes having a Hamming weight of approximately n/2. On the receiving side the cryptograms are decoded, in which process the added error pattern is first determined uniquely from the cryptogram, whereupon the code word can be decoded into the original message. In a "public-key" cryptosystem the code generator is public in "scrambled" form, in a "secret-key" cryptosystem it is not. Since rapid decoding algorithms exist for error-correcting codes of this type, high enciphering rates (≥ 1M bits/sec) can be accomplished. Reference [4] discloses a "public-key" cryptosystem of this type, in which the fact that it is possible to retrieve on the receiving side the artificially added error pattern in a unique manner, is utilized either to transmit additional ("secondary" message) information such as an authentication code, or to actively use part of the error pattern for error correction on the communication link.

A cryptosystem based on enciphering schemes of this type has the following significant drawbacks:

- the (primary) information rate R between sender and recipient is k/n, is therefore always less than 1;
- because k≠n, current methods for blockwise encipherment are not applicable directly, and repeated encipherment is not possible. Moreover, the enciphering scheme, owing to an inherent linearity is insecure as such. Although reference [3], more in particular section III. B., provides a suggestion of overcoming this drawback, specifically by employing non-linear codes, this does have the drawback that the simplicity of the use of linear codes is lost.

B. Summary of the invention

The object of the invention is to provide a method for blockwise encipherment and decipherment, based on algebraic coding methods, employing "secret-key" elements, which method does not have the abovementioned drawbacks.

The invention is based on the following insight. For a correcting code a parity-check matrix is chosen at the same time, by means of which it is possible to determine, on the receiving side, whether a transmitted code vector has or has not come across without error. Multiplication of the parity-check matrix with a correctly received code vector (of length n) results in the null vector of length n-k, with an incorrectly received code vector, however, in a residual vector ≠$\underline{0}$ of length n-k, known as syndrome vector. In a "secret-key" cryptosystem, the set of error vectors, from which a random choice is made on the sender side, is secret and composed in such a way that for every possible syndrome vector, which may be the result of the parity check on the receiving side, only one error vector exists and that all the error vectors are different. This forms the basis of the fact that it is possible to retrieve in a unique manner, on the receiving side, the error vector used on the sending side. Regarding n-k additional message symbols, directly or via an invertible transform, as a syndrome vector and using this, in a similar manner as on the receiving side, to determine, on the sending side as well, the error vector to be used, ensures that blocks are at all times enciphered into cryptograms having the same length. A random choice of an error vector on the sending side is retained in the process insofar as the n-k additional message symbols in different blocks are random with respect to one another.

A method for enciphering and deciphering messages to be transmitted, in a cryptosystem for making communication links secure, which method comprises a first sub-method for enciphering message data, the message data being converted in a blockwise manner into cryptograms suitable for transmission over a communication link to be made secure, and a second sub-method for deciphering received cryptograms, in which the message data are recovered, according to the invention, to this end, comprises the steps according to Claim 1.

In a first preferred embodiment, the method moreover comprises the step according to Claim 2, and in a second preferred embodiment the step according to Claim 3. This overcomes the drawback of the linearity of the enciphering scheme, while linear codes can nevertheless be used.

Reference [6] discloses that the Rao-Nam scheme has a certain vulnerability to particular so-called "chosen-plaintext" attacks, and that the degree of vulnerability to these can be reduced by arranging for the enciphering step with the matrix E on the sending side to be preceded by a transform of the message vector with a secret invertible non-linear function which, moreover, can be chosen to be dependent on the selected error vector. In a preferred embodiment, the method according to the invention further comprises the step according to Claim 4.

Additional advantages of enciphering and deciphering schemes according to the invention to be mentioned are that there is no restriction of the Hamming weight of the error vectors to be used and that encipherment of a null message (i.e. the message vector containing exclusively null symbols) and of a unit message (i.e. a message vector having only one message symbol and for the rest null symbols) does not make a cryptosystem based on these enciphering schemes insecure, at least does not demonstrably reduce the security.

C. <u>References</u>

[1] R. J. McEliece: "A public-key cryptosystem based on algebraic coding theory", DSN Progress Report 42-44, Jet Propulsion Laboratory, Pasadena, pp. 114-116, January 1978;

[2] T.R.M. Rao and K.-H. Nam: "Private-key algebraic cryptosystems", in: Advances in Cryptology - CRYPTO '86. New York: Springer-Verlag, 1986, pp. 35-48;

[3] T.R.N. Rao and K.H. Nam: "Private-key algebraic-code encryptions", IEEE Trans. Inform. Theory, vol. IT-35, no. 4, pp. 829-833, July 1989;

[4] USA-A-5,054,066

[5] J. Meijers and J. van Tilburg: "Extended majority voting and private-key algebraic-code encryptions", ASIACRYPT'91 Fujiyoshida, Japan, November 1991;

[6] R. Struik and J. van Tilburg: "The Rao-Nam scheme is insecure against a chosen-plaintext attack", in: Advances in Cryptology - CRYPTO '87. New York: Springer-Verlag, 1987, pp. 445-457.

D. <u>Brief description of the drawing</u>

The invention will be explained below in more detail in a description of several illustrative embodiments. In so doing, reference will be made to a drawing containing the following figures:

FIG. 1      shows, in a block diagram, an overview of a current cryptosystem on the basis of a secret key;

FIG. 2(a)      shows, for the cryptosystem shown in Figure 1, a known enciphering scheme based on an algebraic coding method;

FIG. 2(b)      shows a known deciphering scheme corresponding to the enciphering scheme shown in Figure 2(a);

FIG. 3(a)      shows, for the cryptosystem shown in Figure 1, an enciphering scheme based on an algebraic coding method according to the invention;

FIG. 3(b)      shows a deciphering scheme corresponding to the enciphering scheme shown in Figure 3(a) according to the invention;

FIG. 4(a)      shows, in diagrammatic form, a specific embodiment of the enciphering scheme according to Figure 3(a);

FIG. 4(b)      shows, in diagrammatic form, a specific embodiment of the deciphering scheme according to Figure 4(a).

E. <u>Description of an illustrative embodiment</u>

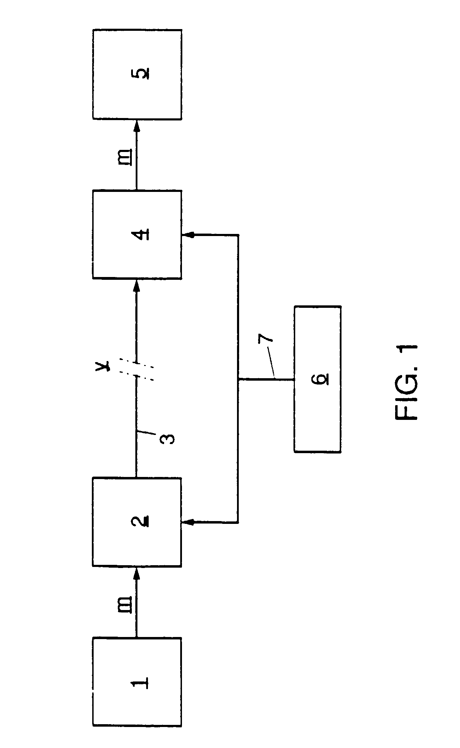

Cryptographic systems, or more briefly cryptosystems, are used for making communication links such as, for example, in telecommunication networks secure. There are "public-key" cryptosystems and "secret-key" cryptosystems. The invention relates to a "secret-key" cryptosystem, in which algebraic coding methods are used for enciphering and deciphering messages to be transmitted. In a "secret-key" cryptosystem, messages to be transmitted over a communication link are enciphered and deciphered on the basis of a secret key or a number of secret key elements. Figure 1 depicts the essential components of a cryptosystem of this type. A message $\underline{m}$ generated on the sending side by a message sender 1 is enciphered in an enciphering unit 2 by means of an enciphering algorithm ENC into a cryptogram $\underline{y}$ which is then transmitted via a communication link 3. On the receiving side of the communication link 3, the cryptogram $\underline{y}$ is deciphered again in a deciphering unit 4 by means of a deciphering algorithm DEC into the original message $\underline{m}$ which is then presented to the recipient 5.

This can be expressed symbolically by:

$$\text{ENC}(\underline{m},k) = \underline{y} \qquad \text{and} \qquad \text{DEC}(\underline{y},k) = \underline{m} \qquad \{1\}$$

In this process, the enciphering and deciphering algorithms depend on an identical secret key k which has previously been generated by a key-managing agency 6 and has been supplied via a secure route 7 to the enciphering and deciphering units 2 and 4.

Reference [3], more in particular page 831 in sections II.B. and II.C., discloses an enciphering scheme on the basis of an algebraic coding method and a corresponding deciphering scheme. Reference [5], more especially section 3, discloses a formulation which is equivalent thereto. The description of the illustrative embodiments is based on said equivalent formulation. Although said formulation also holds good, more generally, over finite bodies $\mathscr{F}_q$ with q>2, the formulation, as there, for the sake of the simplicity of the further description, is limited to the finite body $\mathscr{F}_2$, the binary case therefore.

Given, as secret key elements, are:

- a k×n enciphering matrix E of rank k with its right inverse $E^{-R}$ for which $EE^{-R} = I_k$ holds good, where $I_k$ is the kxk identity matrix;
- an (n-k)×n matrix D of rank n-k which is a parity-check matrix corresponding to the matrix E, in such a way that $ED^T = O$, where $D^T$ represents the transpose of the matrix D and O represents the k×(n-k) null matrix;
- a so-called syndrome/error vector table $T = \{(\underline{s},\underline{z}) \mid \underline{s}=\underline{z}D^T, \underline{z}\in W\}$, where W is a set of error vectors $\underline{z}$ of length n, said table being composed in such a way that corresponding to each different syndrome vector $\underline{s}$ of length n-k there is only one different error vector $\underline{z}$. Instead of the syndrome/error vector table T it is also possible, as is known (see reference [3], more especially section III. B. on page 833), to use a secret function t with independent variables, chosen on the basis of the unique syndrome/error vector combinations which would otherwise be selected for the composition of the table T; therefore $t(\underline{s}) = \underline{z}$ for all $(\underline{s},\underline{z})\in T$.

Reference [6] discloses that the Rao-Nam scheme has a certain vulnerability to particular so-called "chosen-plaintext" attacks, and that the degree of vulnerability to these can be reduced by arranging for the enciphering step with the matrix E on the sending side to be preceded by a transform of the message vector with a secret invertible non-linear function which, moreover, can be chosen to be dependent on the selected error vector. Written symbolically, this is a function $f(\underline{m},\underline{z})$, which converts the message vector $\underline{m}$ into a transformed message vector $\underline{m}'$ of the same length.

Starting from said key elements, a message $\underline{m}$ of length k, called message vector $\underline{m}$, is enciphered into a cryptogram $\underline{y}$ of length n according to the scheme:

$$\underline{y} = f(\underline{m},\underline{z})E + \underline{z} = \underline{m}'E + \underline{z} = \underline{c} + \underline{z} \qquad \{2\}$$

where $\underline{z}$ is chosen randomly from the set W; and the cryptogram $\underline{y}$ is deciphered according to the scheme:

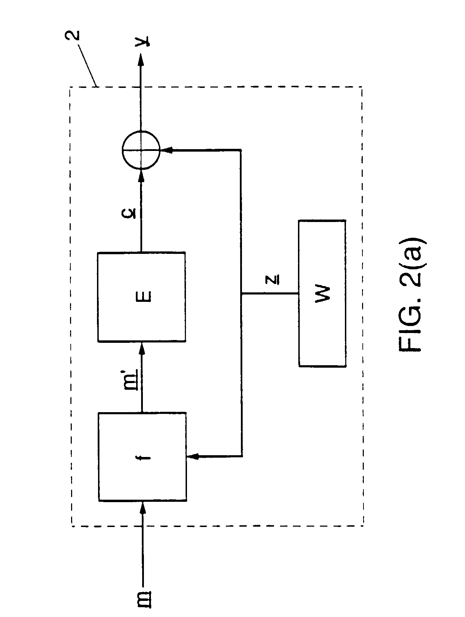

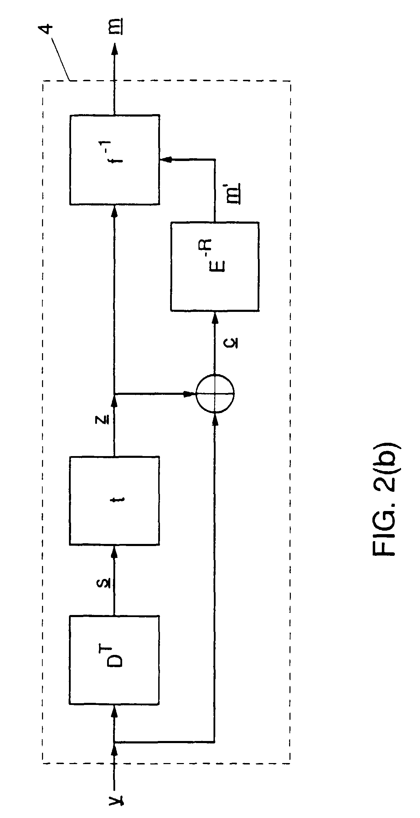

(i) calculate the syndrome vector: $\underline{y}D^T = \underline{z}D^T = \underline{s}$;
(ii) determine in the table T, for the calculated $\underline{s}$, the unique error vector $\underline{z}$;
(iii) calculate the transformed message vector: $(\underline{y}+\underline{z})E^{-R} = \underline{c}E^{-R} = \underline{m}'$; N.B. in the binary case, "subtraction" by coordinates is identical to "addition" by coordinates;
(iv) calculate the original message vector: $f^{-1}(\underline{m}',\underline{z}) = \underline{m}$. Figure 2(a) and Figure 2(b) show the respective block diagrams for these known enciphering and deciphering schemes.

Since schemes of this type, based on an error-correcting code, always involve the conversion of a number of k message symbols into a code word of n symbols, encipherment and decipherment is always effected in a blockwise manner.

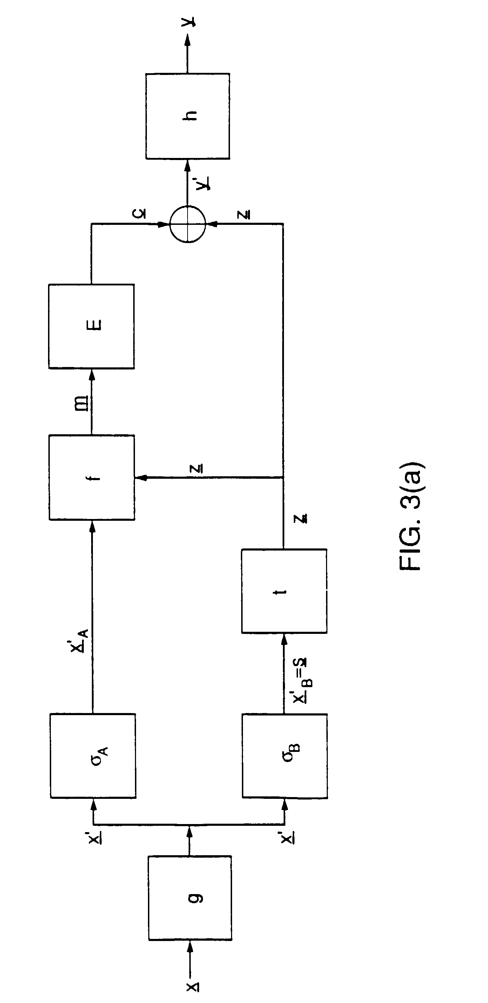

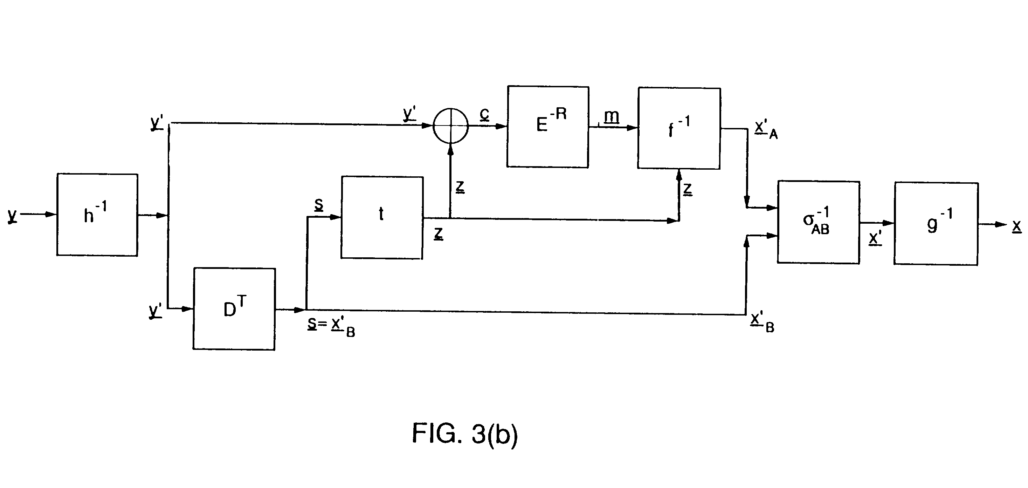

These known schemes have the limitation, however, that the length (k) of the message vector $\underline{m}$ to be enciphered is smaller than the length (n) of the cryptogram. As a result, the information rate R=k/n between sender and recipient is always smaller than 1, current methods for blockwise encipherment are not directly applicable, and repeated enciphering is not possible. If the same syndrome/error vector table T $(\underline{s},\underline{z})$ or a table function t equivalent thereto with function values $\{t(\underline{s}) = \underline{z} \mid (\underline{s},\underline{z}) \in T\}$ is also present on the sender side, the choice of a random error vector $\underline{z}$ may be made by, for example, using a "random" generator to determine a syndrome vector $\underline{s}$, the corresponding error vector $\underline{z}$ then being determined by means of the table or the function. The length of the syndrome vector $\underline{s}$, as it happens, is precisely n-k. If, then, n-k additional message symbols are involved in the encipherment, therefore a total of n message symbols, of which k symbols, at least primarily, are treated according to the known enciphering scheme and the remaining n-k symbols are used to determine the syndrome vector $\underline{s}$ to find its corresponding error vector $\underline{z}$, said limitation is lifted. Block diagrams of enciphering and deciphering schemes based on this thought are depicted in Figure 3(a) and Figure 3(b).

Given as enciphering and deciphering elements are:

- a first invertible non-linear function $g(\underline{x}) = x'$ and a second invertible non-linear function $h(\underline{y}') = \underline{y}$, which convert vectors $\underline{x}$ and $\underline{y}'$, respectively, of length n into transformed vectors $\underline{x}'$ and $\underline{y}$, likewise of length n;
- a first selection function $\sigma_A(\underline{x}) = \underline{x}_A$, which converts a vector $\underline{x}$ of length n into a first part-vector $\underline{x}_A$ of length k<n as follows: if $\underline{x} = (x_1, x_2, ---, x_n)$, then $\underline{x}_A = (x_{a1}, x_{a2}, ---, x_{ak})$, where A={a1, a2,----, ak} is a subset of the set of coordinate indices {1,2,---,n}. In other words, $\sigma_A$ forms, from a presented vector, the first partvector by selecting vector coordinates therefrom according to a given selection pattern;
- a second selection function $\sigma_B(\underline{x}) = \underline{x}_B$, which converts a vector $\underline{x}$ of length n into a second part-vector $\underline{x}_B$ of length n-k as follows: if $\underline{x} = (x_1, x_2, ---, x_n)$, then $\underline{x}_B = (x_{b1}, x_{b2}, ---, x_{b(n-k)})$, where the set B={b1, b2,----, b(n-k)} is likewise a subset of the set of coordinate indices {1,2,---,n}, but complementary to the set A. Therefore, $\sigma_B$ in fact does the same as $\sigma_A$, but forms the second part-vector from the "remaining" vector coordinates of the presented vector;
- a reconstruction function $\sigma_{AB}^{-1}(\underline{x}_A, \underline{x}_B) = \underline{x}$, which reconstructs, from two presented part-vectors $\underline{x}_A$ and $\underline{x}_B$, respectively of length k and n-k, the vector x, for which the relationships $\sigma_A(\underline{x}) = \underline{x}_A$ and $\sigma_B(\underline{x}) = \underline{x}_B$ holds good; which function therefore in fact forms the inverse of the functions $\sigma_A$ and $\sigma_B$ used in combination;
- a k×n enciphering matrix E of rank k, with its right inverse $E^{-R}$;
- an (n-k)×n matrix D of rank n-k which is a parity-check matrix corresponding to the matrix E, such that the relationship $ED^T = O$ holds good, i.e. the k×(n-k) null matrix, where $D^T$ represents the transpose of the matrix D;
- a syndrome/error vector function $t(\underline{s})=\underline{z}$, which converts a presented syndrome vector $\underline{s}$ of length n-k into an error vector $\underline{z} \in W$, where $W \mathscr{F}_2^n \subset$ with the property: if $\underline{z}_1, \underline{z}_2, \in W$, then $(\underline{z}_1 + \underline{z}_2)D^T \neq 0$; in this case the function t is constructed in such a way that, corresponding to each different syndrome vector $\underline{s}$ of length n-k, there is a different error vector $\underline{z}$;
- a third invertible non-linear function $f(\underline{x}_A, \underline{z}) = \underline{m}$, which converts a vector $\underline{x}_A$ of length k as a function of a given vector $\underline{z}$ of length n into a vector $\underline{m}$ of length k.

The enciphering scheme for the encipherment of a message vector $\underline{x}$ of length n into a cryptogram $\underline{y}$ of the same length comprises the following steps:

e(i) calculate the vector $\underline{x}' = g(\underline{x})$ of length n;
e(ii) determine the first part-vector $\underline{x}_A' = \sigma_A(\underline{x}')$ of length k and the second part-vector $\underline{x}_B = \sigma_B(\underline{x}')$ of length n-k;
e(iii) choose the second part-vector as the syndrome vector: $\underline{s} = \underline{x}_B'$, and determine the error vector $\underline{z} = t(\underline{s})$ of length n;
e(iv) calculate the vector $\underline{m} = f(\underline{x}_A', \underline{z})$ of length k;
e(v) calculate the vector $\underline{y}' = \underline{m}E + \underline{z}$ of length n;
e(vi) calculate the vector $\underline{y} = h(\underline{y}')$.

Figure 3(a) shows a block diagram of this enciphering scheme.

A deciphering scheme corresponding to this enciphering scheme, for deciphering the cryptogram y into the original message vector $\underline{x}$ of length n comprises the following steps:

d(i) calculate the vector $\underline{y}' = h^{-1}(\underline{y})$ of length n;
d(ii) calculate the syndrome vector $\underline{s} = \underline{y}'D^T$ of length n-k;
d(iii) determine the error vector $\underline{z} = t(\underline{s})$ of length n;
d(iv) calculate the vector $\underline{m} = (\underline{y}' - \underline{z})E^{-R}$ of length k;
d(v) calculate the vector $\underline{x}_A' = f^{-1}(\underline{m}, \underline{z})$ of length k;
d(vi) determine the vector $\underline{x}' = \sigma_{AB}^{-1}(\underline{x}_A', \underline{x}_B')$ of length n, wherein vector $\underline{x}_B' = \underline{s}$, the syndrome vector calculated in step d(ii), is chosen;
d(vii) calculate the vector $\underline{x} = g^{-1}(\underline{x}')$ of length n, the original message vector.

Figure 3(b) shows a block diagram of this deciphering scheme.

The invertible non-linear functions f, g and h can be chosen, as is usual, as a function of secret keys ka, kb and kc, respectively, symbolically designated by $f_{ka}$, $g_{kb}$, and $h_{kc}$. In the most general embodiment of these enciphering/deciphering schemes, the keys ka, kb and kc, the selection sets A and B, the matrix E (including implicitly the matrix D) and the syndrome/error vector function t($\underline{s}$) form the secret key elements. The functions g and h are preferably chosen to be each other's inverse, and the selection sets A and B are chosen to be fixed.

A syndrome vector s of length n-k can be written as follows:

$$\underline{s} = (s_1, s_2, \text{--}s_{n-k}) = \Sigma_{1 \leq i \leq n-k} \ s_i \underline{u}^{(i)} \qquad \{3\}$$

for i = 1,--,n-k, and where $\underline{u}^{(i)}$ is the i-th unit vector of length n-k (i.e. the vector having a 1 on the i-th coordinate position and zeros on the remaining n-k-1 coordinate positions). The n-k unit vectors $\underline{u}^{(i)}$ are in fact the unit syndrome vectors which span the syndrome vector space. In the case of given matrices E and D, for which the relationship $ED^T = O$ holds good, it is necessary to determine, for each unit syndrome vector $\underline{u}^{(i)}$ of the code C generated by the matrix E, an error vector $\underline{z}^{(i)}$ for which the following relationship must hold good:

$$\underline{z}^{(i)} D^T = \underline{u}^{(i)} \text{ where } 1 \leq i \leq n-k \qquad \{4\}$$

where $\underline{z}^{(i)} \neq \underline{z}^{(j)}$ for i≠j. The equation {4} implies, for each $1 \leq i \leq n-k$, a system of n-k equations with n unknowns, so that each error vector $\underline{z}^{(i)}$ can be chosen freely within the constraints set by the n-k equations. Combination of the equations {3} and {4} gives:

$$\underline{s} = \Sigma_{1 \leq i \leq n-k} \ s_i \underline{u}^{(i)} = \Sigma_{1 \leq i \leq n-k} \ s_i \underline{z}^{(i)} D^T = \underline{z} D^T \qquad \{5\}$$

from which it follows that

$$\underline{z} = \Sigma_{1 \leq i \leq n-k} \ s_i \underline{z}^{(i)},$$

which can be written as

$$\underline{z} = \underline{s} Z \qquad \{6\},$$

where Z is an (n-k)×n matrix, of which the n-k rows are formed by the vector coordinates of the n-k selected error vectors $\underline{z}^{(i)}$. The matrix Z is thus a simple implementation of the table function t (with t($\underline{s}$) = $\underline{z}$).

The enciphering and deciphering schemes according to the invention can be implemented both in hardware and in software by conventional means. Hardware implementation is to be preferred at high enciphering rates, while a software implementation permits a higher degree of flexibility.

Example 1.

The example involves an encipherment of binary blocks of length 32, each block in turn being processed subdivided into sub-blocks of length 8, that is byte-wise. To this end, a 32-bit vector $\underline{x}$ to be enciphered is notated as $\underline{x} = (\underline{x}_1, \underline{x}_2, \underline{x}_3, \underline{x}_4)$, therefore partitioned into subvectors of 8 bits, each subvector $\underline{x}_i = (x_{8i-7}, x_{8i-6}, \text{---}, x_{8i})$ for i = 1,--,4 representing an 8-bit vector. This notation is used hereinafter.

The enciphering matrix E is an 8×32 matrix of full rank (in this case rank 8). The parity-check matrix D is a 24×32 matrix, for which the relationship $ED^T = O$, the 8×24 null matrix, holds good. The table function is implemented by a 24×32 matrix Z which has been obtained in the manner specified above.

For the selection function $\sigma_A$, the set A = {25,--,32}, and for the selection function $\sigma_B$, the set B = {1,--,24}.

The invertible non-linear functions $f_{ka}$, $g_{kb}$ and $h_{kc}$, which depend on keys ka, kb and kc, can be readily implemented, as is known and conventional, with the aid of substitution functions. A substitution function S, sometimes also called S box, consists, for 8-bit sub-block processing, of a row of all the 256 different 8-bit elements. For each 8-bit subvector $\underline{w}$ there is thus a unique 8-bit subvector $\underline{v}$, so that $\underline{w} = S(\underline{v})$ and $\underline{v} = S^{-1}(\underline{w})$ hold good.

The keys ka, kb and kc are binary bit sequences and are therefore also notated as vectors $\underline{ka}$, $\underline{kb}$ and $\underline{kc}$, partitioned into 8-bit subvectors. In this example they have been chosen as follows: $\underline{ka}$ is an 8-bit vector, and $\underline{kb} = \underline{kc}$ are 32-bit vectors.

The function $f_{ka}$ converts, with the aid of a previously determined error vector $\underline{z}$, the part-vector $\underline{x}_A{}'$ according to:

$$f_{ka}(\underline{x}_A{}',\underline{z}) = (S(\underline{x}_{A1}{}' + \underline{z}_1 + \underline{ka}_1)) = (\underline{m}_1) = \underline{m},$$

while for the inverse the following holds good:

$$f_{ka}{}^{-1}(\underline{m},\underline{z}) = (S^{-1}(\underline{m}_1) + \underline{z}_1 + \underline{ka}_1) = (\underline{x}_{A1}{}') = \underline{x}_A.$$

The function $g_{kb}$ converts the message vector $\underline{x}$ according to:

$$g_{kb}(\underline{x}) = (S(\underline{x}_1 + \underline{kb}_1),\text{---},S(\underline{x}_4 + \underline{kb}_4)) = (\underline{x}_1{}',\text{---},\underline{x}_4{}') = \underline{x}'.$$

The function $h_{kb}$ is chosen equal to the inverse of the function $g_{kb}$, i.e. the function $h_{kb}$ converts the vector $\underline{y}'$ into the cryptogram $\underline{y}$ according to:

$$h_{kb}(\underline{y}') = (S^{-1}(\underline{y}_1{}')+\underline{kb}_1,\text{---},S^{-1}(\underline{y}_4{}')+\underline{kb}_4) = (\underline{y}_1,\text{---},\underline{y}_4) = \underline{y}.$$

The secret key elements are the key vectors $\underline{ka}$ and $\underline{kb}$ and the matrices E (including, implicitly, matrix D) and Z.

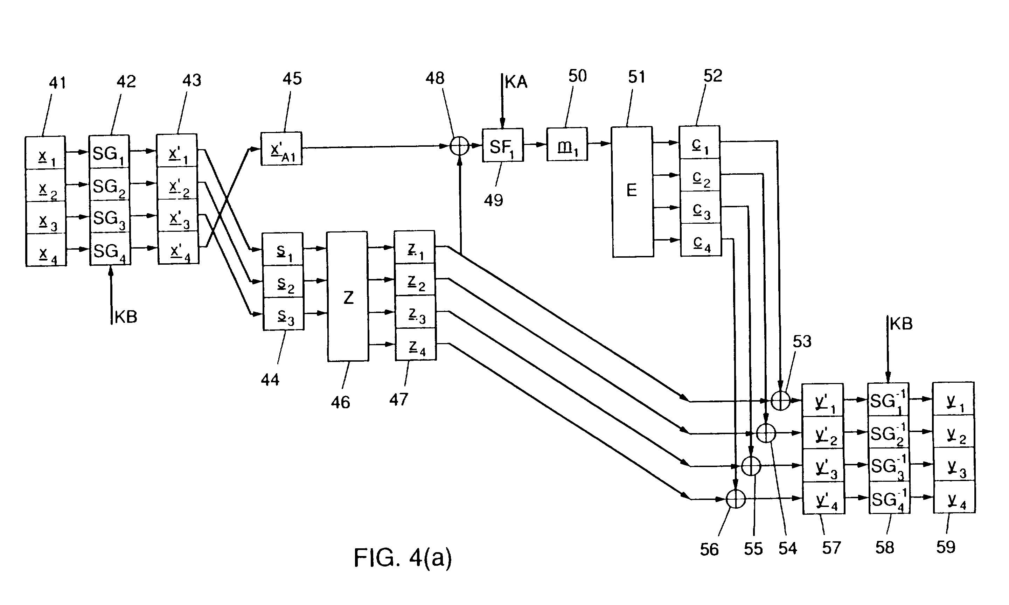

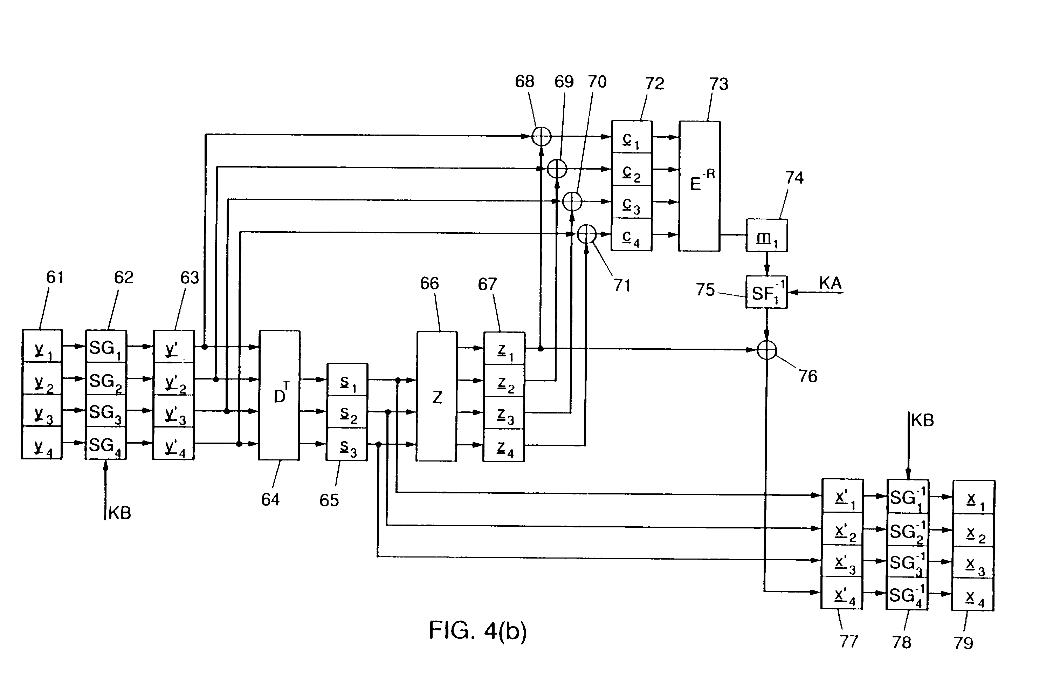

The enciphering scheme according to this example is depicted in Figure 4(a). The message vector $\underline{x}$ to be enciphered is placed into a first memory block 41 with four byte positions, one for each of four subvectors $\underline{x}_i$ of $\underline{x}$. From the memory block 41, the four subvectors are each separately presented to a first substitution block 42, wherein the presented subvectors $\underline{x}_i$ are converted into subvectors $\underline{x}_i{}'$ according to the function $g_{kb}$. In order to perform this conversion operation in a byte-wise manner, the substitution block 42 consists of four S boxes SG1 to SG4 inclusive. Said S boxes are chosen to be mutually identical, in accordance with the chosen function $g_{kb}$, but a presented subvector $\underline{x}_i$ first has a corresponding subvector $\underline{kb}_i$ of the supplied key $\underline{kb}$ added to it, before substitution takes place. This is specified in the figure by the arrow KB. The substitution results are placed into a second memory block 43, likewise with four byte positions for the subvectors $\underline{x}_i{}'$. In accordance with the selection scheme defined by the chosen sets A and B, the first three subvectors of the vector $\underline{x}'$ serve as the syndrome vector $\underline{s}$ and, to this end, are placed into a third memory block 44 with three byte positions, while the fourth subvector $\underline{x}_4{}'$ is placed into a fourth memory block 45 with one byte position, to form the first part-vector $\underline{x}_A{}'$. The syndrome vector $\underline{s}$ is subjected in its entirety, in a matrix block 46, to a matrix multiplication with the matrix Z, which results in an error vector $\underline{z}$ of length 32, whose subvectors $\underline{z}_i$ are placed into the four byte positions of a fifth memory block 47. In an adder 48, the part-vector in the fourth memory block 45 and the part-vector in the first byte position of the fifth memory block 47 are added (in a binary and coordinate-wise manner). The result of the addition is presented to a second substitution block 49 and converted into a subvector $\underline{m}_1$ according to the function $f_{ka}$. The substitution block 49 consists of one S box SF1. Said S box, in accordance with the chosen function $f_{ka}$, is chosen to be identical to the S box from the first substitution block 42, but in this case, too, the subvector presented by the adder 48 first has the only subvector $\underline{ka}_1$ of the supplied key $\underline{ka}$ added to it, before substitution takes place. This is specified in the figure by the arrow KA. The substitution result, the subvector $\underline{m}_1$, is placed into a sixth memory block 50 with one byte position. The subvector $\underline{m}_1$ is subjected in its entirety, in a second matrix block 51, to a matrix multiplication with the matrix E, which results in a code vector $\underline{c}$ of length 32, whose subvectors $\underline{c}_i$ are placed into the four byte positions of a seventh memory block 52. In the adders 53, 54, 55 and 56, the part-vectors $\underline{c}_i$ of the code vector $\underline{c}$ from the seventh memory block 52 are added to the corresponding part-vectors $\underline{z}_i$ of the error vector $\underline{z}$ from the fifth memory block 47. The result of the addition, the vector $\underline{y}'$ with the part-vectors $\underline{y}_i{}'$, is placed into an eighth memory block 57 with four byte positions. From the memory block 57, the four subvectors $\underline{y}_i{}'$ are each separately presented to a third substitution block 58, in which the presented subvectors $\underline{y}_i{}'$ are converted into subvectors $\underline{y}_i$ according to the function $g_{kb}{}^{-1}$. For the purpose of byte-wise execution of this conversion, the substitution block 58 consists of four S boxes SG1$^{-1}$ to SG4$^{-1}$, inclusive. Said S boxes, in accordance with the chosen function $g_{kb}{}^{-1}$, are chosen to be mutually identical and form the inverse of the S box used in the first substitution block 42. Moreover, the substitution result of a presented subvector $\underline{y}_i{}'$ has a corresponding subvector $\underline{kb}_i$ of the supplied key $\underline{kb}$ added to it. This is specified in the figure by the arrow KB. The substitution results are placed into a ninth memory block 59, likewise with four byte positions. They form the part-vectors $\underline{y}_i$ of the cryptogram $\underline{y}$.

The corresponding deciphering scheme is depicted in Figure 4(b). The designations therein completely match those in Figure 4(a), so that a mere enumeration of the numbered components is provided. The diagram incorporates:

- six memory blocks, 61, 63, 67, 72, 77 and 79 with four byte positions each for the subvectors of the vectors $\underline{y}$, $\underline{y}'$, $\underline{z}$, $\underline{c}$, $\underline{x}'$ and $\underline{x}$, respectively;
- a memory block 65 with three byte positions for the syndrome vector $\underline{s}$;
- a memory block 74 with one byte position for the vector $\underline{m}_1$;
- two substitution blocks 62 and 78, identical to the substitution blocks 42 and 58, respectively, in the enciphering scheme of Figure 4(a), for converting the vectors $\underline{y}$ into $\underline{y}'$, and $\underline{x}'$ into $\underline{x}$, respectively;
- a substitution block 75 which is the inverse of the substitution block 49 in the deciphering scheme of Figure 4(a), for converting the subvector $\underline{m}_1$;
- four adders 68 to 71, inclusive, for byte-wise addition of the vector $\underline{y}'$ and the error vector $\underline{z}$;
- an adder 76 for adding the first subvector $\underline{z}_1$ of the error vector $\underline{z}$ and the subvector $\underline{m}_1$ converted in the substitution block 75;
- three matrix blocks 64, 66 and 73 for performing matrix multiplications with the matrices $D^T$, Z and $E^{-R}$, respectively, on the vectors $\underline{y}'$, $\underline{s}$ and $\underline{c}$ according to:

$$\underline{y}'D^T = \underline{s}, \ \underline{s}Z = \underline{z}, \text{ and } \underline{c}E^{-R} = \underline{m}_1.$$

The specific choice of the function $h_{kc}$ as the inverse of the function $g_{kb}$ is advantageous in the case of repeated enciphering, where the content of the memory block 57 is repeatedly placed, for a previously determined number of times, into the memory block 43, before this is presented to the substitution block 58 to obtain the actual cryptogram $\underline{y}$ to be transmitted. It goes without saying that on the deciphering side it is necessary to decipher for the same number of times by feeding the content of memory block 77 back to the memory block 63 each time. This number of times can be derived, for example, from one of the key elements according to a predetermined procedure.

Given the generator matrix G of an (n,k) linear code C in canonic form: G = [I|Q], where I is the $k \times k$ identity matrix and Q is a $k \times (n-k)$ matrix. For the corresponding parity-check matrix H the relationship: H = [-Q$^T$|I] then holds good, from which it can be seen directly that: GH$^T$ = O$_{k,n-k}$, the $k \times (n-k)$ null matrix. Of the matrix Z, by means of which, for a given syndrome vector, a unique error vector can be calculated from a limited set of error vectors, a kind of canonic form can likewise be defined by:

$Z_o$ = [O$_{n-k,k}$|I$_{n-k}$], where O$_{n-k,k}$ is the $(n-k) \times k$ null matrix and I$_{n-k}$ is the $(n-k) \times (n-k)$ identity matrix and from which it is immediately found that: $Z_o$H$^T$ = I$_{n-k}$.

Starting from a given generator matrix G in canonic form, an arbitrary enciphering matrix can be constructed for the (n,k) linear code C by:

E = SGP, where S is an invertible $k \times k$ matrix and P is an $n \times n$ permutation matrix. In order to avoid long key elements such as S and P, it is known to generate these on the basis of keys of limited length, so-called "short seeds" (see reference [3], more especially the "note" in section II.C., p. 831). An S box can likewise be generated on the basis of a short seed of this type.

Example 2

Applied to the above-described embodiment of Example 1 this means that, for given key elements ka, kb, kd, ke, kf and kg, and for a given generator matrix G of the (32,8) linear code C, the matrices E, D and Z are first determined in a number of preliminary steps as follows:

(1) determine, on the basis of the key element kd, a first invertible $8 \times 8$ matrix $S_{kd}$ and, on the basis of the key element ke, a second invertible $8 \times 8$ matrix $S_{ke}$;
(2) determine, on the basis of the key element kf, a $32 \times 32$ permutation matrix $P_{kf}$;
(3) calculate the enciphering matrix E according to: E = $S_{kd}$GP$_{kf}$;
(4) calculate the parity-check matrix D according to: D = HP$_{kf}$;
(5) calculate the matrix Z according to: Z = $Z_o$P$_{kf}$ + $S_{ke}$E.
(6) generate, on the basis of the key element kg, an 8-bit S box.

Here again, the relationships: ED$^T$ = O and ZD$^T$ = $Z_o$H$^T$ hold good.
It should be mentioned expressly, that the enciphering matrix E may represent a randomly chosen linear (n, k) code C, as long as it is always true that the matrix E is a matrix of full rank. The minimum distance between the code words does not matter. Even if a canonic form of the generator matrix G is used as a starting point for a linear code, the matrix Q can be chosen randomly, for example on the basis of an additional key element kh.

**Claims**

1. A method for enciphering and deciphering messages in a cryptosystem for making communication links secure, which method comprises a first sub-method for enciphering message data, the message data being converted in a blockwise manner into cryptograms suitable for transmission over a communication link to be made secure, and a second sub-method for deciphering received cryptograms, in which the message data are recovered, which first sub-method for enciphering comprises the following steps:

   - converting message data to be transmitted into blocks of n message symbols, thus forming message vectors with n vector coordinates,
   - splitting each message vector into a first part-vector of length k and a second part-vector of length n-k, the n vector coordinates of the message vector having selected therefrom k vector coordinates for the vector coordinates of the first part-vector and the remaining n-k vector coordinates for the vector coordinates of the second part-vector, according to a previously specified selection scheme,
   - coding the first part-vector with the aid of a previously chosen $k \times n$ matrix E of full rank, which represents a generator matrix for an error-correcting code C, forming a code vector of length n in the process,
   - selecting, in a unique manner, with the aid of the second part-vector, an error vector from a set of error vectors of length n, which set has previously been compiled with the aid of an $(n-k) \times n$ matrix D from error vectors, the matrix D representing a parity-check matrix for the error-correcting code C and the error vectors each representing a different error pattern which can be corrected with the aid of the code C,
   - determining, by adding the selected error vector and the code vector, a sum vector of length n for obtaining a cryptogram, and which second sub-method for deciphering comprises the following steps:
   - reconstructing the second part-vector from the cryptogram by matrix multiplication with the transpose of the parity-check matrix D,
   - selecting, in a unique manner, with the aid of the second part-vector, the error vector from the set of error vectors,
   - reconstructing the code vector by binary addition of the cryptogram and the selected error vector,
   - reconstructing the first part-vector by decoding the code vector with the aid of an $n \times k$ matrix which is the right inverse matrix of the generator matrix E,
   - reconstructing the message vector by combining the decoded first and second part-vectors in accordance with a scheme which is the inverse of said selection scheme.

2. Method according to Claim 1, wherein, in the first sub-method, the message vector, prior to splitting, is converted, with the aid of a first invertible non-linear transform, into a transformed message vector of the same length, and in the second sub-method the reconstruction of the message vector is effected by combining the coded first and second part-vectors, the transformed message vector being obtained, followed by a conversion with the aid of a transform which is the inverse of said first invertible non-linear transform.

3. Method according to Claim 1 or 2, wherein, in the first sub-method for obtaining the cryptogram, the sum vector is converted, with the aid of a second invertible non-linear transform, into a transformed sum vector of the same length, and in the second sub-method the cryptogram, prior to the reconstruction of the second part-vector, is converted into the sum vector with the aid of a transform which is the inverse of the second invertible non-linear transform.

4. Method according to any one of the Claims 1,--,3, wherein, in the first sub-method prior to the step of coding, the first part-vector is converted, with the aid of a third invertible non-linear transform which is a function of the error vector selected with the aid of the second part-vector, into a transformed first part-vector, and in the second sub-method the step of reconstructing the first part-vector consists of the decoding, the transformed first part-vector being obtained in the process, followed by a conversion with the aid of a transform which is the inverse of said third invertible non-linear transform.

5. Method according to any one of Claims 1,---,4, wherein the $k \times n$ matrix E has previously been constructed by matrix multiplication of a non-singular $k \times k$ matrix S, a $k \times n$ generator matrix G for an error-correcting code C and an $n \times n$ permutation matrix P, and the step of reconstructing the second part-vector is performed by matrix multiplication with the transpose of the parity-check matrix D which has previously been constructed by matrix multiplication of an (n-k)$\times$n matrix H, which is a parity-check matrix, corresponding to the generator matrix G, for the error-correcting code C, and the inverse (n$\times$n) permutation matrix P$^{-1}$.

6. Method according to Claim 1, wherein the selection of the error vector is effected by matrix multiplication with an (n-k)$\times$n matrix Z, for which it holds good that matrix multiplication with the transpose of the parity-check matrix D produces the (n-k) identity matrix, i.e. $ZD^T = I_{n-k}$.

7. Method according to Claim 6, wherein the matrices E, D and Z have been generated previously on the basis of a generator matrix G for the error-correcting code C in canonic form and a number of secret key elements of limited length.

8. Method according to any one of Claims 3, 4 or 5, wherein the invertible non-linear transforms are effected as a function of a secret key.

9. Method for *blockwise* encipherment of message data into cryptograms, comprising the steps of:

   - converting message data to be transmitted into blocks of n message symbols, thus forming message vectors with n vector coordinates,
   - splitting each message vector into a first part-vector of length k and a second part-vector of length n-k, the n vector coordinates of the message vector having selected therefrom k vector coordinates for the vector coordinates of the first part-vector and the remaining n-k vector coordinates for the vector coordinates of the second part-vector, according to a previously specified selection scheme,
   - coding the first part-vector with the aid of a previously chosen k$\times$n matrix E of full rank, which represents a generator matrix for an error-correcting code C, forming a code vector of length n in the process,
   - selecting, in a unique manner, with the aid of the second part-vector, an error vector from a set of error vectors of length n, which set has previously been compiled with the aid of an (n-k)$\times$n matrix D from error vectors, the matrix D representing a parity-check matrix for the error-correcting code C and the error vectors each representing a different error pattern which can be corrected with the aid of the code C,
   - determining, by adding the selected error vector and the code vector, a sum vector of length n for obtaining a cryptogram.

10. Method for deciphering cryptograms, comprising the steps of:

   - reconstructing a first part-vector from the cryptogram by matrix multiplication with the transpose of a parity-check matrix D,
   - selecting, in a unique manner, with the aid of the first part-vector, an error vector from a set of error vectors,
   - reconstructing a code vector by binary addition of the cryptogram and the selected error vector,
   - reconstructing a second part-vector by decoding the code vector with the aid of an n$\times$k matrix which is the right inverse matrix of a generator matrix E,
   - reconstructing a message vector by combining the decoded first and second part-vectors in accordance with a scheme which is the inverse of a previously specified selection scheme used in generating the cryptogram.

## Patentansprüche

1. Verfahren zum Verschlüsseln und Entschlüsseln von Nachrichten in einem Kryptosystem, um Kommunikationsverbindungen sicher zu machen, wobei das Verfahren ein erstes Unterverfahren zur Verschlüsselung von Nachrichtendaten, wobei die Nachrichtendaten in einer blockweisen Art in Kryptogramme gewandelt werden, die zur Übertragung über eine Kommunikationsverbindung, die sicher zu machen ist, geeignet sind, und ein zweites Unterverfahren zur Entschlüsselung von empfangenen Kryptogrammen umfasst, bei denen die Nachrichtendaten zurückzuerhalten sind, wobei das erste Unterverfahren der Verschlüsselung die folgenden Schritte umfasst:

   - Umwandeln von zu übertragenden Nachrichtendaten in Blöcke von n Nachrichtensymbolen, die so Nachrichtenvektoren mit n Vektorkoordinaten bilden,
   - Aufspalten jedes Nachrichtenvektors in einen ersten Teilvektor der Länge k und einen zweiten Teilvektor der Länge n-k, wobei von den n Vektorkoordinaten des Nachrichtenvektors k Vektorkoordinaten für die Vektorkoordinaten des ersten Teilvektors und die verbleibenden n-k Vektorkoordinaten für die Vektorkoordinaten des zweiten Teilvektors gemäss einem vorab bestimmten Auswahlschema ausgewählt sind,

- Codieren des ersten Teilvektors mit der Hilfe einer vorab gewählten k×n Matrix E von vollem Rang, welche eine Generatormatrix für einen Fehler korrigierenden Code C darstellt, welcher einen Codevektor der Länge n in diesem Verfahren ausbildet,
- Auswählen in einer einzigartigen Weise mit der Hilfe des zweiten Teilvektors eines Fehlervektors aus einem Satz von Fehlervektoren der Länge n, wobei dieser Satz vorab mit der Hilfe einer (n-k)×n Matrix D aus Fehlervektoren zusammengestellt worden ist, wobei die Matrix eine paritätsprüfende Matrix für den Fehler korrigierenden Code darstellt und die Fehlervektoren jeweils ein verschiedenes Fehlermuster darstellen, welches mit der Hilfe des Codes C korrigiert werden kann,
- Bestimmen durch Addieren des gewählten Fehlervektors und des Codevektors zu einem Summenvektor der Länge n, um ein Kryptogramm zu erhalten,

  und wobei das zweite Unterverfahren zur Entschlüsselung die folgenden Schritte umfasst:
- Rekonstruieren des zweiten Teilvektors aus dem Kryptogramm durch Matrixmultiplikation mit der Transponierten der Paritätsprüfungsmatrix D,
- Auswählen des Fehlervektors in einer einzigartigen Weise mit der Hilfe des zweiten Teilvektors aus dem Satz von Fehlervektoren,
- Rekonstruieren des Codevektors durch binäre Addition des Kryptogramms mit dem ausgewählten Fehlervektor,
- Rekonstruieren des ersten Teilvektors durch Decodieren des Codevektors mit der Hilfe einer n×k Matrix, welche die rechte inverse Matrix der erzeugenden Matrix E ist, und
- Rekonstruieren des Nachrichtenvektors durch Kombinieren der decodierten ersten und zweiten Teilvektoren in Übereinstimmung mit einem Schema, welches das Inverse des besagten Auswahlschemas ist.

2. Verfahren nach Anspruch 1, dadurch gekennzeichnet, dass in dem ersten Unterverfahren der Nachrichtenvektor vor dem Aufteilen mit der Hilfe einer ersten invertierbaren, nicht-linearen Transformation in einen transformierten Nachrichtenvektor derselben Länge umgewandelt wird, und dass in dem zweiten Unterverfahren die Rekonstruktion des Nachrichtenvektors durch das Kombinieren der codierten ersten und zweiten Teilvektoren bewirkt wird, wobei der transformierte Nachrichtenvektor nach einer Umwandlung mit der Hilfe einer Transformierten erhalten wird, welche die Inverse der besagten ersten invertierbaren, nicht-linearen Transformation ist.

3. Verfahren nach Anspruch 1 oder Anspruch 2, dadurch gekennzeichnet, dass in dem ersten Unterverfahren zum Erhalt des Kryptogramms der Summenvektor mit der Hilfe einer zweiten invertierbaren, nicht-linearen Transformation in einen transformierten Summenvektors derselben Länge konvertiert wird und dass im zweiten Unterverfahren das Kryptogramm vor der Rekonstruktion des zweiten Teilvektors in den Summenvektor mit der Hilfe einer Transformation gewandelt wird, welche die Inverse der zweiten invertierbaren, nicht-linearen Transformation ist.

4. Verfahren nach einem der Ansprüche 1 bis 3, dadurch gekennzeichnet, dass in dem ersten Unterverfahren vor dem Schritt des Codierens der erste Teilvektor mit der Hilfe einer dritten invertierbaren, nicht-linearen Transformation, welche eine Funktion des Fehlervektors ist, welcher mit der Hilfe des zweiten Untervektors ausgewählt ist, in einen transformierten ersten Teilvektor gewandelt wird, und dass in dem zweiten Unterverfahren der Schritt des Rekonstruierens des ersten Teilvektors aus dem Decodieren, wobei der transformierte erste Teilvektor in diesem Verfahren erhalten wird, gefolgt von einer Umwandlung mit der Hilfe einer Transformation erreicht wird, welche die Inverse der besagten dritten invertierbaren, nicht-linearen Transformation ist.

5. Verfahren nach einem der Ansprüche 1 bis 4, dadurch gekennzeichnet, dass die k×n Matrix E vorher durch eine Matrixmultiplikation einer nicht-singulären k×k Matrix S, einer k×n erzeugenden Matrix G für einen Fehler korrigierenden Code C und einer n×n Permutationsmatrix P erstellt worden ist und durch den Schritt gekennzeichnet ist, dass das Rekonstruieren des zweiten Teilvektors durch Matrixmultiplikation mit der Transponierten der paritätsprüfenden Matrix D durchgeführt wird, welche vorab erstellt worden ist, durch Matrixmultiplikation einer (n-k)×n Matrix H, welche eine die Parität prüfende Matrix ist entsprechend der erzeugenden Matrix G, für den Fehler korrigierenden Code C und der inversen (n×n) Permutationsmatrix $P^{-1}$.

6. Verfahren nach Anspruch 1, dadurch gekennzeichnet, dass die Auswahl des Fehlervektors durch eine Matrixmultiplikation mit einer (n-k)×n Matrix Z durchgeführt wird, für welche gilt, dass die Matrixmultiplikation mit der Transponierten der paritätsprüfenden Matrix D die (n-k) Identitätsmatrix erzeugt, das heisst $ZD^T = I_{n-k}$.

7. Verfahren nach Anspruch 6, dadurch gekennzeichnet, dass die Matrizen E, D und Z vorab auf der Basis einer erzeugenden Matrix G für den Fehler korrigierenden Code C in kanonischer Form und eine Anzahl von geheimen Schlüsselelementen von begrenzter Länge hergestellt worden sind.

8. Verfahren nach einem der Ansprüche 3, 4 oder 5, dadurch gekennzeichnet, dass die invertierbaren, nicht-linearen Transformationen als Funktion eines geheimen Schlüssels ausgeführt sind.

9. Verfahren zum blockweisen Verschlüsseln von Nachrichtendaten in Kryptogramme mit den Verfahrensschritten:

   - des Wandelns von zu übermittelnden Nachrichtendaten in Blöcke von n Nachrichtensymbolen, die so die Nachrichtenvektoren mit n Vektorkoordinaten bilden,
   - des Aufspaltens jedes Nachrichtenvektors in einen ersten Teilvektor der Länge k und in einen zweiten Teilvektor der Länge (n-k), wobei aus den n Vektorkoordinaten des Nachrichtenvektors k Vektorkoordinaten für die Vektorkoordinaten des ersten Teilvektors und die verbleibenden (n-k) Vektorkoordinaten für die Vektorkoordinaten des zweiten Teilvektors gemäss einem vorab festgelegten Selektionsschema ausgewählt sind,
   - des Codierens des ersten Teilvektors mit der Hilfe einer vorab ausgewählten k×n Matrix E mit vollem Rang, welche eine generierende Matrix für einen Fehler korrigierenden Code C darstellt, der einen Codevektor n in diesem Verfahren bildet,
   - des Auswählens in einer einzigartigen Weise mit der Hilfe des zweiten Teilvektors eines Fehlervektors aus einem Satz von Fehlervektoren der Länge n, wobei dieser Satz vorab mit der Hilfe einer (n-k)×n Matrix D aus Fehlervektoren zusammengestellt worden ist, wobei die Matrix D eine paritätsprüfende Matrix für den Fehler korrigierenden Code C darstellt und die Fehlervektoren jeweils ein unterschiedliches Fehlermuster darstellen, welches mit der Hilfe des Codes C korrigiert werden kann,
   - des Feststellens eines Summenvektors der Länge n zum Erhalt eines Kryptogramms durch Hinzufügen des gewählten Fehlervektors und des Codevektors.

10. Verfahren zum Entschlüsseln von Kryptogrammen mit den Verfahrensschritten:

   - des Rekonstruierens eines ersten Teilvektors aus dem Kryptogramm durch Matrixmultiplikation mit der Transponierten einer die Parität prüfenden Matrix D,
   - des Auswählens eines Fehlervektors in einer einzigartigen Weise mit der Hilfe des ersten Teilvektors aus einem Satz von Fehlervektoren,
   - des Rekonstruierens eines Codevektors durch binäre Addition des Kryptogramms und des ausgewählten Fehlervektors,
   - des Rekonstruierens eines zweiten Teilvektors durch Decodieren des Codevektors mit der Hilfe einer n×k Matrix, welche die rechte inverse Matrix einer erzeugenden Matrix E ist, und
   - des Rekonstruierens eines Nachrichtenvektors durch Kombinieren der decodierten ersten und zweiten Teilvektoren in Übereinstimmung mit einem Schema, welches das Inverse eines vorab bestimmten Auswahlschemas ist, welches eingesetzt worden ist, um das Kryptogramm zu erzeugen.

**Revendications**

1. Procédé permettant de chiffrer et de déchiffrer des messages dans un système cryptographique de façon à rendre sûres les liaisons de télécommunications, lequel procédé comprend un premier sous-procédé servant à chiffrer des données de message, les données de message étant converties par blocs en cryptogrammes convenant pour assurer la sécurité à une transmission sur une liaison de télécommunications, et un deuxième sous-procédé servant à déchiffrer des cryptogrammes reçus, dans lequel les données de message sont récupérées, lequel premier sous-procédé de chiffrement comprend les opérations suivantes :

   convertir des données de message devant être transmises en blocs de n symboles de message, de manière à ainsi former des vecteurs de message ayant n coordonnées vectorielles,
   séparer chaque vecteur de message en un premier vecteur partiel de longueur k et un deuxième vecteur partiel de longueur n - k, les n coordonnées vectorielles du vecteur de message ayant fait l'objet, parmi elles, d'une sélection de k coordonnées vectorielles se rapportant aux coordonnées vectorielles du premier vecteur partiel tandis que les n - k coordonnées vectorielles restantes se rapportent aux coordonnées vectorielles du deuxième vecteur partiel, selon un schéma de sélection préalablement spécifié,
   coder le premier vecteur partiel à l'aide d'une matrice k×n préalablement choisie E de plein rang, et qui représente une matrice génératrice pour un code de correction d'erreur C, formant un vecteur de code de longueur n dans le processus,
   sélectionner, d'une manière unique, à l'aide du deuxième vecteur partiel, un vecteur d'erreur à partir d'un ensemble de vecteurs d'erreur de longueur n, lequel ensemble a préalablement été compilé à l'aide d'une matrice (n × k) × n, D, à partir de vecteurs d'erreur, la matrice D représentant une matrice de contrôle de parité pour le code de correction d'erreur C et les vecteurs d'erreur représentant chacun une configuration d'erreur différente qui peut être corrigée à l'aide du code C,

déterminer, en ajoutant le vecteur d'erreur sélectionné et le vecteur de code, un vecteur somme de longueur n permettant d'obtenir un cryptogramme, et lequel deuxième sous-procédé de déchiffrement comprend les opérations suivantes :

reconstruire le deuxième vecteur partiel à partir du cryptogramme par multiplication matricielle avec la transposée de la matrice de contrôle de parité D,

sélectionner, d'une manière unique, à l'aide du deuxième vecteur partiel, le vecteur d'erreur à partir de l'ensemble de vecteurs d'erreur,

reconstruire le vecteur de code par addition binaire du cryptogramme et du vecteur d'erreur sélectionné,

reconstruire le premier vecteur partiel en décodant le vecteur de code à l'aide d'une matrice n×k qui est la matrice inverse à droite de la matrice génératrice E,

reconstruire le vecteur de message en combinant les premier et deuxième vecteurs partiels décodés selon un schéma qui est l'inverse dudit schéma de sélection.

2. Procédé selon la revendication 1, où, dans le premier sous-ensemble, le vecteur de message, avant la séparation, est converti, à l'aide d'une première transformation non linéaire inversible, en un vecteur de message transformé de la même longueur, et dans lequel le sous-procédé de la reconstruction du vecteur de message est effectué par combinaison des premier et deuxième vecteurs partiels codés, le vecteur de message transformé étant obtenu, à la suite d'une conversion, à l'aide d'une transformation qui est l'inverse de ladite première transformation linéaire inversible.

3. Procédé selon la revendication 1 ou 2, où, dans le premier sous-procédé d'obtention du cryptogramme, le vecteur somme est converti, à l'aide d'une deuxième transformation non linéaire inversible, en un vecteur somme transformé de la même longueur, et, dans le deuxième sous-procédé, le cryptogramme, avant la reconstruction du deuxième vecteur partiel, est converti en le vecteur somme à l'aide d'une transformation qui est l'inverse de la deuxième transformation non linéaire inversible.

4. Procédé selon l'une quelconque des revendications 1 à 3, où, dans le premier sous-procédé, avant l'opération de codage, le premier vecteur partiel est converti, à l'aide d'une troisième transformation non linéaire inversible qui est une fonction du vecteur d'erreur sélectionné à l'aide du deuxième vecteur partiel, en un premier vecteur partiel transformé, et, dans le deuxième sous-procédé, l'opération de reconstruction du premier vecteur partiel consiste en le décodage, le premier vecteur partiel transformé étant obtenu dans le processus, suivi par une conversion effectuée à l'aide d'une transformation qui est l'inverse de ladite troisième transformation non linéaire inversible.

5. Procédé selon l'une quelconque des revendications 1 à 4, où, la matrice k × n, E, a préalablement été construite par multiplication matricielle d'une matrice k × k non singulière S, d'une matrice génératrice k × n, G, relative à un code de correction d'erreur C et d'une matrice de permutation n × n, P, et l'opération de reconstruction du deuxième vecteur partiel est effectuée par multiplication matricielle avec la transposée de la matrice de contrôle de parité D qui a été préalablement construite par multiplication matricielle d'une matrice (n - k) × n H, qui est une matrice de contrôle de parité, correspondant à la matrice génératrice G, relative au code de correction d'erreur C, et de la matrice de perturbation (n × n) inverse $P^{-1}$.

6. Procédé selon la revendication 1, où la sélection du vecteur d'erreur est effectuée par multiplication matricielle avec une matrice (n - k) × n, Z, pour laquelle il est vérifié que sa multiplication matricielle avec la transposée de la matrice de contrôle de parité D produit la matrice unité (n - k), à savoir $ZD^T = I_{n-k}$.

7. Procédé selon la revendication 6, où les matrices E, D et Z ont été produites préalablement sur la base d'une matrice génératrice G relative au code de correction d'erreur C sous forme canonique et d'un certain nombre d'éléments de la clé secrète de longueur limitée.

8. Procédé selon l'une quelconque des revendications 3, 4 et 5, où les transformations non linéaires inversibles sont effectuées en fonction d'une clé secrète.

9. Procédé de chiffrement bloc par bloc de données de message en cryptogrammes, comprenant les opérations suivantes :

convertir des données de message devant être transmises en blocs de n symboles de message, en formant ainsi des vecteurs de message ayant n coordonnées vectorielles,

séparer chaque vecteur de message en un premier vecteur partiel de longueur k et un deuxième vecteur partiel de longueur n - k, les n coordonnées vectorielles du vecteur de message ayant fait l'objet d'une sélection, parmi elles, de k coordonnées vectorielles se rapportant aux coordonnées vectorielles du premier vecteur partiel, tandis que les n- k coordonnées vectorielles restantes se rapportent aux coordonnées vectorielles du deuxième vecteur partiel, selon un schéma de sélection préalablement spécifié,

coder le premier vecteur partiel à l'aide d'une matrice k x n, E, de plein rang préalablement choisie, qui représente une matrice génératrice relative à un code de correction d'erreur C, formant un vecteur de code de longueur n dans le processus,

sélectionner, d'une manière unique, à l'aide du deuxième vecteur partiel, un vecteur d'erreur à partir d'un ensemble de vecteurs d'erreur de longueur n, lequel ensemble a été préalablement compilé à l'aide d'une matrice $(n - k) \times n$, D, à partir de vecteurs d'erreur, la matrice D représentant une matrice de contrôle de parité relative au code de correction d'erreur C et les vecteurs d'erreur représentant chacun une configuration d'erreur différente qui peut être corrigée à l'aide du code C,

déterminer, par addition du vecteur d'erreur sélectionné et du vecteur de code, un vecteur somme de longueur n permettant d'obtenir un cryptogramme.

**10.** Procédé de déchiffrement de cryptogrammes, comprenant les opérations suivantes :

reconstruire un premier vecteur partiel à partir du cryptogramme par multiplication matricielle avec la transposée d'une matrice de contrôle de parité D,

sélectionner, d'une manière unique, à l'aide du premier vecteur partiel, un vecteur d'erreur à partir d'un ensemble de vecteurs d'erreur,

reconstruire un vecteur de code par addition binaire du cryptogramme et du vecteur d'erreur sélectionné,

reconstruire un deuxième vecteur partiel par décodage du vecteur de code à l'aide d'une matrice $n \times k$ qui est la matrice inverse à droite d'une matrice génératrice E,

reconstruire un vecteur de message par combinaison des premier et deuxième vecteurs partiels décodés, selon un schéma qui est l'inverse d'un schéma de sélection préalablement spécifié qui est utilisé lors de la production du cryptogramme.

FIG. 1

FIG. 2(a)

FIG. 2(b)

FIG. 3(a)

FIG. 3(b)

EP 0 605 047 B1

FIG. 4(a)

EP 0 605 047 B1

FIG. 4(b)